# EUROPÄISCHE PATENTSCHRIFT

(11) **EP 1 750 083 B1**
(45) Veröffentlichungstag und Bekanntmachung des Hinweises auf die Patenterteilung: **09.09.2015**
(21) Anmeldenummer: 06011954.2
(22) Anmeldetag: 09.06.2006
(51) Int. Cl.: G01B 5/00, G01B 21/00, G01D 5/347

(54) **Längenmesseinrichtung**
Length measuring device
Dispositif de mesure de longueur

(30) Priorität: 04.08.2005 JP 2005226535
(43) Veröffentlichungstag der Anmeldung: 07.02.2007
(73) Patentinhaber: Dr. Johannes Heidenhain GmbH, 83301 Traunreut (DE)
(72) Erfinder: Watanabe, Yoshio, Chiba-ken 297-0051 (JP); Motoyuki, Katsumi, Mobara-shi Chiba-ken 297-0051 (JP)

(56) Entgegenhaltungen:
- EP-A- 1 195 581
- EP-A1- 0 947 806
- DE-A1- 3 601 945
- DE-A1- 4 406 798
- GB-A- 1 583 489
- JP-A- 2001 317 967
- US-A- 4 031 595

## Beschreibung

Die vorliegende Erfindung betrifft eine Längenmesseinrichtung, die zur Messung des relativen Bewegungsausmaßes bei der Bearbeitung durch Werkzeugmaschinen o.ä. ideal ist, und insbesondere eine optische Längenmesseinrichtung, die einen Aufbau aufweist, welcher den Einfluss durch Verzerrungen, die bei der Fixierung während des Anbaus auftreten, möglichst verringert.

Bei Werkzeugmaschinen o.ä. ist zur Vornahme einer Präzisionsbearbeitung die genaue Messung des relativen Bewegungsausmaßes des Werkzeugs in Bezug auf das zu bearbeitende Objekt äußerst wichtig, und es werden verschiedenste Positionsmessvorrichtungen dafür vertrieben.

Als eine derartige Vorrichtung ist eine optische Skale bekannt, bei der Moire-Streifen verwendet werden, die durch Überlagerung von zwei optischen Gittern erhalten werden. Diese optische Skale weist eine Hauptskale auf, für die an einer Fläche einer rückstrahlenden Glasskale ein Gitter (Gravurlinien) ausgebildet ist, für das lichtdurchlässige Bereiche und lichtundurchlässige Bereiche in bestimmten Schrittlängen angeordnet sind, und auch eine Indexskale auf, für die an einer Fläche eines durchsichtigen Glases, das an der Oberfläche eines Sensorteils ausgebildet ist, ein Gitter (Gravurlinien) ausgebildet ist, für das lichtdurchlässige Bereiche und lichtundurchlässige Bereiche in bestimmten Schrittlängen angeordnet sind. Die Hauptskale und die Indexskale stehen einander mit einem winzigen Abstand gegenüber, und das Gitter der Indexskale ist in Bezug auf das Gitter der Hauptskale mit einer Neigung um einen kleinen Winkel angeordnet.

Wenn sich das Gitter um eine Schrittlänge P bewegt, verschieben sich die Moiré-Streifen nur um den Abstand der Streifen, und das Bewegungsausmaß innerhalb einer Schrittlänge kann durch das Ablesen der Veränderung des Durchgangslichts durch Schlitze innerhalb des Abstands und des Reflexionslichts genau gemessen werden. Die genaue Theorie einer derartigen Linearskale, die Moire-Streifen verwendet, ist beispielsweise in der Japanischen Offenlegungsschrift 2001-317967 ausgeführt.

Die Befestigung einer Längenmesseinrichtung erfolgt häufig ausschließlich an den Enden. Beispiele dazu finden sich in der GB 1583489 A, der DE 4406798 A1 sowie der EP 0947806 A1.

Bei der GB 1583489 A ist eine Skalenbasis vorgesehen, die mittels separater Endstücke zu befestigen ist. Die Skalenbasis berührt die Anbaufläche im Bereich des Maßstabes an keiner Stelle und wird auch nicht unterstützt. Diese Gesamtanordnung ist sehr schwingungsempfindlich.

Ebenso sind bei der DE 4406798 A1 separate Endstücke zum Befestigen vorgesehen. Diese Endstücke sind über in Messrichtung elastische Stege an die Skalenbasis angekoppelt. Die Skalenbasis berührt die Anbaufläche im Bereich des Maßstabes an keiner Stelle und wird auch nicht unterstützt. Diese Gesamtanordnung ist sehr schwingungsempfindlich.

Bei der Längenmesseinrichtung gemäß der EP 0947806 A1 erfolgt die Befestigung der Skalenbasis ausschließlich an den Enden in Bereichen, in denen kein Maßstab verläuft. Der Maßstab ist frei gespannt. Zwischen der Skalenbasis und der Anbaufläche sind separate Unterlegscheiben vorgesehen. Die Skalenbasis berührt die Anbaufläche im Bereich des Maßstabes an keiner Stelle und wird auch nicht unterstützt. Diese Gesamtanordnung ist sehr schwingungsempfindlich und der Aufbau ist kompliziert.

Die DE 3601945 A1 zeigt eine Längenmesseinrichtung, bei der zwischen einem Träger eines Maßstabs und einer Anbaufläche Beilagscheiben angeordnet sind. Diese Maßnahme erfordert eine umständliche Handhabung und bringt Ungenauigkeiten ein.

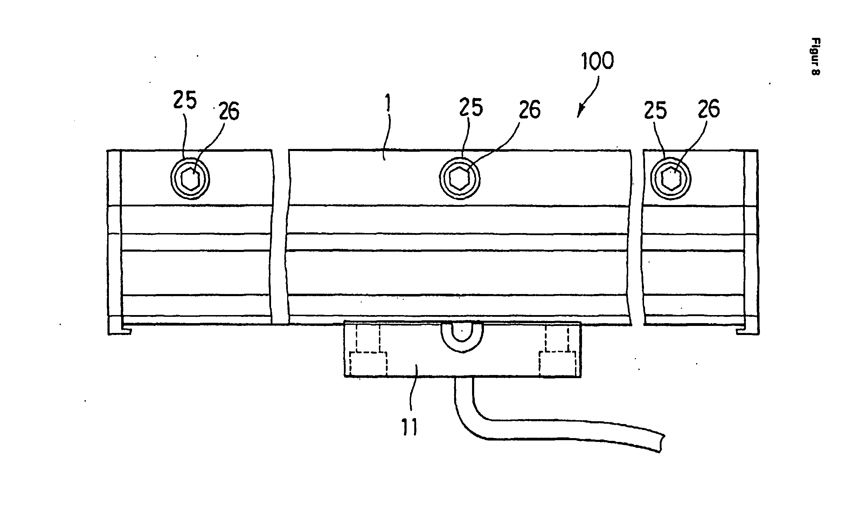

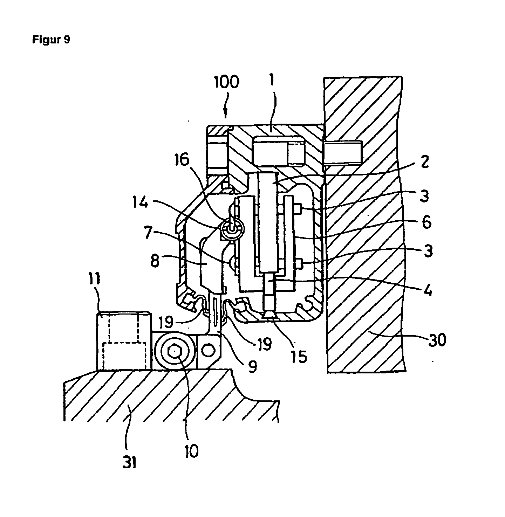

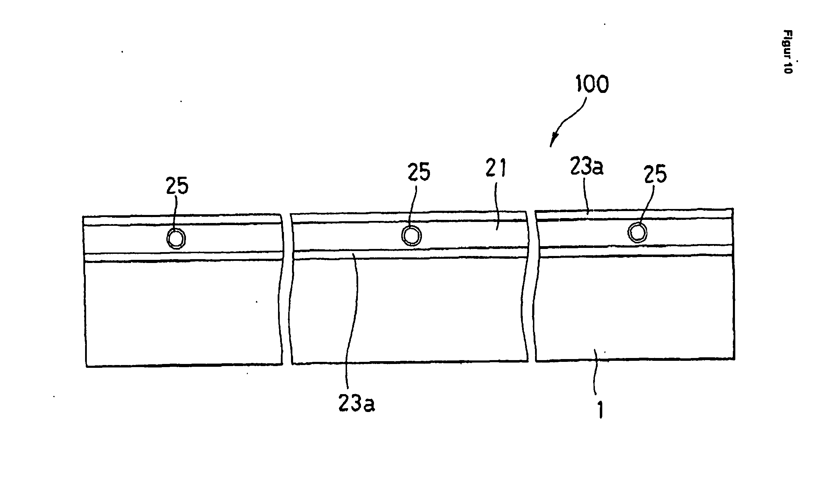

Der Aufbau einer herkömmlichen Längenmesseinrichtung von der die Erfindung ausgeht und die der in der US 4,031,595 beschriebenen Längenmesseinrichtung ähnlich ist, ist in den Figuren 8 bis 10 gezeigt. Figur 8 zeigt eine Vorderansicht einer herkömmlichen Längenmesseinrichtung 100, Figur 9 einen Querschnitt der Längenmesseinrichtung, und Figur 10 seine Hinteransicht. Die gezeigte Längenmesseinrichtung 100 ist u.a. aus einem Gleiter 6, der an einer Glasskale 2 gleitet, und einem Fixierungselement 11, das am beweglichen Teil 31 einer (nicht dargestellten) Werkzeugmaschine angebracht ist, aufgebaut. Der Gleiter 6 besteht aus einem Sensorteil 7 zum Ablesen der Positionsveränderung, linken und rechten seitlichen Führungsrollen 3, die für ein Gleiten an der Glasskale 2 angebracht sind, einer unteren Führungsrolle 4, und einer Aufnahme 15 an einer Skalenbasis 1 zur Führung der unteren Führungsrolle. Bei der Verwendung ist der Gleiter 6 wie in Figur 9 gezeigt durch die Skalenbasis 1 abgedeckt, deren Öffnung durch ein Abdeckelement 19 dicht verschlossen ist.

Das Fixierungselement 11 ist am beweglichen Teil 31 der Werkzeugmaschine angebracht und besteht u.a. aus einem winkelförmigen Abschnitt 8, einem Arm 9 und einer Welle 10. Der winkelförmige Abschnitt 8 weist durch die Welle 10 einen Freiheitsgrad (Drehung) bei der Verbindung mit dem Gleiter 6 auf.

Ein am Fixierungselement 11 ausgebildetes zweites Schwenklager 14 ist über einen dazwischen befindlichen Kopplungsdrehpunkt gegenüber einem am Gleiter 6 ausgebildeten, nicht dargestellten ersten Schwenklager angeordnet und durch den in jeweils entgegengesetzte Richtungen gerichteten Zug einer Zugspiralfeder 16 über den Kopplungsdrehpunkt damit gekoppelt. Der winkelförmige Abschnitt 8 des Fixierungselements 11 ist über den Kopplungsdrehpunkt durch die Spannkraft der Feder 16 in einem beinahe schwebenden Zustand mit dem Gleiter 6, der den Sensorteil 7 aufweist, gekoppelt.

Die Skalenbasis 1 und das Fixierungselement 11 der Längenmesseinrichtung 100 sind am stationären Teil 30 bzw. am beweglichen Teil 31 der Werkzeugmaschine angebracht, und das Bewegungsausmaß (die Positionsverschiebung) des beweglichen Teils 31 der Werkzeugmaschine wird als relatives Bewegungsausmaß zwischen der Glasskale 2 und dem Sensorteil 7 des Gleiters 6 in Messrichtung X festgestellt.

Zu diesem Zweck ist für die Anbringung der Längenmesseinrichtung 100 neben der Notwendigkeit für ein gemeinsames Verhalten mit der Bank o.ä. der Werkzeugmaschine eine genaue Fixierung entlang der Messrichtung X nötig. Was das Fixierungsverfahren betrifft, wird die streifenförmige in Messrichtung X durchgehende Anbringungsfläche 23a der Skalenrückseite wie in Figur 8 bis 10 gezeigt durch Anbringungsöffnungen 25 und Schrauben 26 an mehreren Punkten gegen die Bank der Werkzeugmaschine aufliegend fixiert. Da die Glasskale 2 mit der Skalenbasis 1 als Standard aufgenommen ist, folgt sie dem Anbringungszustand der Skalenbasis 1.

Zur Verwendung der Längenmesseinrichtung 100 mit guter Genauigkeit ist bei der Anbringung der Skalenbasis 1 (des Gehäuses) eine Anbringung in Bezug auf die Maschinenführung unter gutem Verlauf der Oberseite und der Anbringungsfläche der Skalenbasis 1 nötig. Was den Verlauf der Oberseite der Skalenbasis 1 betrifft, wird eine Regulierung unter Überprüfung des Verlaufs in Bezug auf die Maschinenführung durch eine Messuhr o.ä. vorgenommen. Da bei der Anbringungsfläche 23a eine Abhängigkeit von der Verlaufsgenauigkeit der Fläche auf Seiten der Bank, an der die Anbringung erfolgt, besteht, muss vorab so gefertigt werden, dass eine gute Verlaufsgenauigkeit der Fläche auf Seiten der Bank, an der die Anbringung erfolgt, erhalten wird.

Doch an der Anbringungsfläche 23a der Skalenbasis 1 kommt es durch das Festziehen der Anbringungsschraubenbolzen zu einer Kompressionsbeanspruchung der Bereiche, an denen das Festziehen erfolgt, in der Richtung des Festziehens, wodurch Verzerrungen auftreten. Daher werden nur die Bereiche, an denen das Festziehen erfolgt, gepresst und konkav verformt, wodurch entlang der Längsrichtung der Skalenbasis unebene Wellungen entstehen. Als Folge kommt es auch an der Glasskale 2, die mit der Skalenbasis 1 als Standard aufgenommen ist, zu Wellungen in der Messrichtung X. Diese Wellungen erscheinen bei der Messung durch den Codierer als Genauigkeitsfehler. Außerdem können nachstehende Probleme entstehen.
(1) An den Wellungsbereichen der Glasskale 2 entstehen Wellungen der Genauigkeit, wodurch eine genaue Positionsmessung der Werkzeugmaschine nicht möglich wird und die Verarbeitungsgenauigkeit des endverarbeiteten Produkts schlecht wird.
(2) Durch die Anbringung kann die eigentliche Genauigkeit der Skale 2 nicht wiedergegeben werden, und nach der Anbringung werden Genauigkeitskorrekturen für die Werkzeugmaschine erforderlich, was zu einer Vermehrung der Arbeitsschritte bei der Anbringung führt.
(3) Die Skalengenauigkeit verändert sich je nach den Festziehbedingungen der Anbringungsschraubenbolzen 26, so dass die Fähigkeit zur Wiedergabe der Genauigkeit für die Skale 2 nicht bewahrt werden kann.

Die Aufgabe der vorliegenden Erfindung ist es, eine Längenmesseinrichtung mit guter Messgenauigkeit bereitzustellen, bei der mechanische Verzerrungen bei der Anbringung unterdrückt werden und Veränderungen der Messgenauigkeit gering sind.

Diese Aufgabe wird durch eine Längenmesseinrichtung mit den Merkmalen des Anspruchs 1 gelöst.

Nach der vorliegenden Erfindung kann eine Linearskale mit guter Messgenauigkeit bereitgestellt werden, bei der Wellungen der Glasskale durch mechanische Verzerrungen unterdrückt sind, eine genaue Positionsmessung der Werkzeugmaschine möglich ist, die Verarbeitungsgenauigkeit des Endverarbeitungsprodukts erhöht wird, Einflüsse durch die Festziehbedingungen der Anbringungsschraubenbolzen bei der Anbringung beseitigt sind, mechanische Verzerrungen, die bei der Anbringung auftreten, unterdrückt werden, und Veränderungen der Messgenauigkeit gering sind.

Die Längenmesseinrichtung der vorliegenden Erfindung weist eine Skale, eine Gleitereinheit, die diese Skale abtastet und einen Positionsmesswert erhält, und eine hohle Skalenbasis, die die Skale und die Gleitereinheit aufnimmt, auf, wobei an der Skalenbasis Anbringungsöffnungen zur Anbringung der Skalenbasis vorhanden sind und Anbringungsflächen vorhanden sind, die auf die Fläche treffen, an der die Anbringung erfolgt, und wobei im Bereich mit Ausnahme des Umfangs der Anbringungsöffnungen ein Abstand zu der Fläche vorhanden ist, an der die Anbringung erfolgt, und somit diese Fläche nur im Bereich der Anbringungsöffnungen berührt.

Anhand der Figuren wird nachstehend der konkrete Aufbau der Längenmesseinrichtung der vorliegenden Erfindung erklärt. Dabei zeigt:
- Figur 1: eine Hinteransicht (Anschraubfläche) einer Längenmesseinrichtung der vorliegenden Erfindung;
- Figur 2: einen Längsschnit der Längenmesseinrichtung der vorliegenden Erfindung gemäß Figur 1;
- Figur 3: einen Querschnitt der Längenmesseinrichtung gemäß Figur 1;
- Figur 4: ein Diagramm mit den Wellungen der Oberfläche der Glasskale einer Vergleichsausführung;
- Figur 5: ein Diagramm mit den Wellungen der Oberfläche der Glasskale einer Ausführung der Erfindung:
- Figur 6: ein Diagramm mit der Genauigkeit der Längenmesseinrichtung einer Vergleichsausführung;
- Figur 7: ein Diagramm mit der Genauigkeit der Längenmesseinrichtung einer Ausführung der Erfindung;
- Figur 8: eine Vorderansicht des Aufbaus einer herkömmlichen Längenmesseinrichtung;
- Figur 9: einen Querschnitt der herkömmlichen Längenmesseinrichtung nach Figur 8;
- Figur 10: eine Hinteransicht der herkömmlichen Längenmesseinrichtung nach Figur 8.

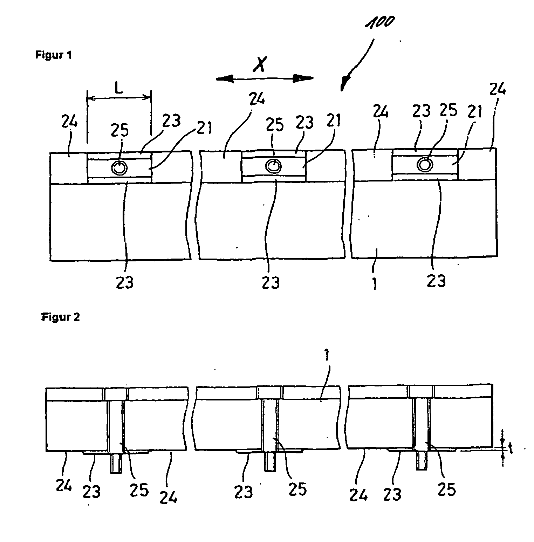

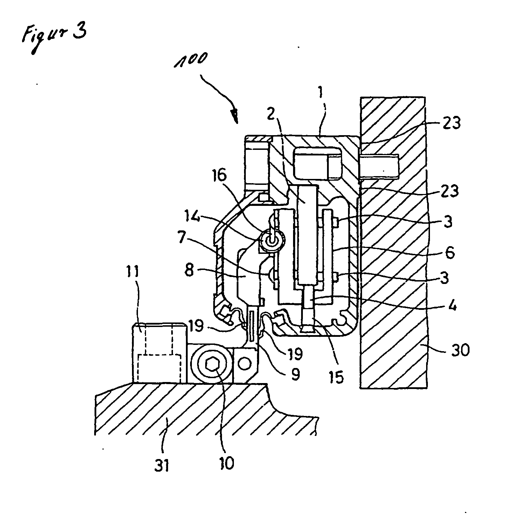

In Figur 1 ist eine Hinteransicht (Anbaufläche) der Längenmesseinrichtung 100 der vorliegenden Erfindung dargestellt, während Figur 2 einen Längsschnitt im Bereich der Anbringungsöffnungen 23 und Figur 3 einen Querschnitt zeigt.

Die gezeigte Längenmesseinrichtung 100 weist eine Glasskale 2, eine Gleitereinheit 6, die diese Glasskale 2 abtastet und einen Positionsmesswert erhält, und eine hohle Skalenbasis 1, die die Glasskale 2 und die Gleitereinheit 6 aufnimmt, auf.

An der Skalenbasis 1 sind mehrere Anbringungsöffnungen 25 ausgebildet. Die Anbringungsflächen 23 an der Hinterseite der Skalenbasis 1 werden gegen eine Fläche, an der die Anbringung erfolgt, wie etwa die Bank einer Werkzeugmaschine gestoßen und durch Anbringungsschrauben oder -bolzen 26 an mehreren in Messrichtung X voneinander beabstandeten Punkten entlang der Skalenbasis 1 festgezogen fixiert.

Die Anbringungsflächen 23 an der Hinterseite der Skalenbasis 1 sind durch einen bestimmten Bereich am Umfang der Anbringungsöffnungen 25 gebildet, während im Bereich mit Ausnahme des Umfangs der Anbringungsöffnungen 25 ein zurückgesetzter Flächenbereich 24 ausgebildet ist, der die Fläche, an der die Anbringung erfolgt, nicht berührt. Bei diesem Beispiel sind die bandförmigen Anbringungsflächen 23 an zwei Stellen oben und unten am Anbringungsabschnitt 21, an dem die Anbringungsöffnungen 25 ausgebildet sind, jeweils mit einer Querschnittform ausgeführt, die einem seitlich liegenden "U" gleicht.

Im Bereich mit Ausnahme des Umfangs der Anbringungsöffnungen 23, das heißt, zwischen einem Anbringungsabschnitt 21, an dem eine Anbringungsfläche 23 gebildet ist, und einem anderen Anbringungsabschnitt 21, oder, falls nötig, zwischen einem Anbringungsabschnitt 21 und einem Ende der Skalenbasis 1, ist ein gegenüber der Anbringungsfläche 23 zurückgesetzter Flächenbereich 24 ausgebildet, so dass es zu keiner Berührung mit der Fläche, an der die Anbringung erfolgt, kommt.

Was die Größe der in Messrichtung X voneinander durch die zurückgesetzten Flächenbereiche 24 getrennten Anbringungsabschnitte 21 betrifft, konzentriert sich die Beanspruchung bei der Anbringung im Fall einer zu kleinen (kurzen) Größe (Länge) des Anbringungsabschnitts 21 zu sehr an einer Stelle, was zu Verformungen führen kann. Wenn andererseits die Größe (Länge) des zurückgesetzten Flächenbereichs 24 zu klein (kurz) ist, nimmt die Fähigkeit zur Milderung von Verformungen aufgrund der Beanspruchung durch das Festziehen der Anbringungsschrauben 26 ab. Um Verformungen zu minimieren, besteht zwischen beiden Größen ein Zusammenhang, so dass je nach Größe oder Form der Längenmesseinrichtung die Abmessungen zu wählen sind. Die optimalen Größen sind aus der Erfahrung und Versuche festzulegen.

Was die Größe im Allgemeinen betrifft, kann die Größe L des Anbringungsabschnitts 21 bei einer in Längsrichtung verlaufenden Länge mit einer zentralen Anbringungsöffnung 25 von 10 bis 40 mm und einem als Abstand zwischen den Anbringungsöffnungen 25 ausgedrückten zurückgesetzten Flächenbereich 24 auf zwischen 150 und 350 mm und insbesondere zwischen 200 und 300 mm gewählt werden.

Was die Tiefe t des zurückgesetzten Flächenbereichs 24 betrifft, ist es zwar ausreichend, wenn dieser in einem solchen Ausmaß niedriger (tiefer) als die Anbringungsfläche 23 liegt, dass es zu keiner Berührung mit der Installationsfläche, der Fläche, an der die Anbringung erfolgt, kommt, doch ist zur Beseitigung des Einflusses von Unebenheiten der Installationsfläche oder von Schmutz eine gewisse Tiefe erforderlich. Auch zur Milderung des Einflusses von Verformungen aufgrund der Beanspruchung durch das Festziehen ist wohl eine gewisse Tiefe erforderlich. Konkret wird eine Tiefe von mindestens 0,05 mm und insbesondere mindestens 0,75 mm in Bezug auf die Anbringungsfläche 23 bevorzugt. Von den Schneidekosten und der Stärke her ist eine Obergrenze von 2 mm und insbesondere höchstens 1 mm wünschenswert.

Der zurückgesetzte Flächenbereich 24 wird durch eine Schneidebearbeitung wie etwa normales Fräsen oder Stirnfräsen gebildet, doch sofern die benötigte Genauigkeit erfüllt wird, können auch andere allgemein bekannte Bearbeitungsverfahren wie ein Sandstrahlen, Feilen oder auch ein Wasserstrahlen verwendet werden. Wenn die Skalenbasis 1 durch ein Gussverfahren hergestellt wird, kann der zurückgesetzte Flächenbereich 24 auch in der Gussform gebildet sein. Die Anbringungsfläche 23 kann durch die gleichen Verfahren wie oben gebildet werden, doch da eine Ausbildung mit hoher Genauigkeit nötig ist, erfolgt die Bildung vorzugsweise durch eine Schneidebearbeitung wie Fräsen oder Stirnfräsen. Die Anbringungsflächen 23 und die zurückgesetzten Flächenbereiche 24 sind einstückig an der Skalenbasis 1 ausgebildet.

Was das Material der Skalenbasis 1, an der der zurückgesetzte Flächenbereich 24 und die Anbringungsfläche 23 gebildet werden, betrifft, bestehen im Wesentlichen keine Beschränkungen, doch wird aufgrund des geringen Gewichts, der leichten Bearbeitbarkeit und der leichten Handhabbarkeit Aluminium bevorzugt. Wenn jedoch ein geringes Gewicht und ein gewisses Ausmaß an Stärke verlangt wird, kann auch eine Aluminiumlegierung wie etwa Duralmin, oder Titan, Wolfram, oder eine Legierung davon verwendet werden. Es kann auch Eisen oder eine eisenhaltige Legierung verwendet werden. Die Wahl des Materials kann je nach der verlangten Stärke und dem Verwendungszweck erfolgen. Wenn Aluminium als Material verwendet wird, wird die Skalenbasis 1 normalerweise durch eine Zugformung hergestellt.

Die Skalenbasis 1 wird über die Anbringungsöffnungen 25 an den Anbringungsstellen der Fläche einer Werkzeugmaschine o.ä., an der die Anbringung erfolgt, angebracht. Die Anbringung oder die Fixierung erfolgt durch Festziehen und Fixieren unter Verwendung von normalen Schrauben 26, Schraubenbolzen, oder diesen gleichartigen Fixierungsmittetn.

Zur Verwendung der Längenmesseinrichtung 100 mit guter Genauigkeit ist es wünschenswert, bei der Anbringung der Skalenbasis 1 einen guten Verlauf der Oberseite und der Anbringungsfläche der Skalenbasis 1 in Bezug auf die Maschinenführung hervorzubringen. Für den Verlauf in der Richtung der Oberseite der Skalenbasis 1 kann eine Regulierung unter Überprüfung des Verlaufs in Bezug auf die Maschinenführung durch eine Messuhr o.ä. erfolgen. Da bei der Anbringungsfläche eine Abhängigkeit von der Verlaufsgenauigkeit der Fläche auf Seiten der Anbringungsstelle wie etwa der Bank, an der die Anbringung erfolgt, besteht, ist es wünschenswert, wenn vorab so gefertigt wird, dass eine gute Verlaufsgenauigkeit der Fläche auf Seiten der Stelle, an der die Anbringung erfolgt, erhalten wird.

Eine Längenmesseinrichtung, die eine derartige Skalenbasis 1 aufweist, besteht wie z.B. in Figur 3 gezeigt u.a. aus einer Glasskale 2, einem Gleiter 6, der an der Glasskale 2 gleitet und Positionsinformationen ausgibt, und einem Fixierungselement 11 zur Anbringung am beweglichen Teil 31 einer (nicht gezeigten) Werkzeugmaschine o.ä. Der Gleiter 6 besteht aus einem Sensorteil 7 zum Ablesen der Positionsveränderung, linken und rechten seitlichen Führungsrollen 3, die für ein Gleiten an der Glasskale 2 angebracht sind, einer unteren Führungsrolle 4, und einer Aufnahme 15 für die untere Führungsrolle 4. Bei der Verwendung ist der Gleiter 6 wie in der Figur 3 gezeigt durch eine Skalenbasis 1 abgedeckt, deren Öffnung durch ein Abdeckelement 19 dicht verschlossen ist.

Das Fixierungselement 11 ist am beweglichen Teil 31 o.ä. der Werkzeugmaschine angebracht und besteht aus einem winkelförmigen Abschnitt 8, einem Arm 9 und einer Welle 10. Der winkelförmige Abschnitt 8 weist durch die Welle 10 Bewegungsfreiheit (Drehung um die Achse der Welle 10) bei der Verbindung mit dem Gleiter 6 auf.

Ein am Fixierungselement 11 ausgebildetes zweites Schwenklager 14 ist über einen dazwischen befindlichen Kopplungsdrehpunkt gegenüber einem am Gleiter 6 ausgebildeten, nicht dargestellten ersten Schwenklager angeordnet und durch den in jeweils entgegengesetzte Richtungen gerichteten Zug einer Zugspiralfeder 16 über den Kopplungsdrehpunkt damit gekoppelt. Der winkelförmige Abschnitt 8 des Fixierungselements 11 ist über den Kopplungsdrehpunkt durch die Spannkraft der Feder in einem beinahe schwebenden Zustand mit dem Gleiter 6, der den Sensorteil 7 aufweist, gekoppelt.

Die Skalenbasis 1 und das Fixierungselement 11 dieser Längenmesseinrichtung sind am stationären Teil 30 bzw. am beweglichen Teil 31 z.B. einer Werkzeugmaschine angebracht, und das Bewegungsausmaß (die Positionsverschiebung) des beweglichen Teils 31 der Werkzeugmaschine wird als relatives Bewegungsausmaß zwischen der Glasskale 2 und dem Sensorteil 7 des Gleiters 6 festgestellt.

Anschließend wird eine repräsentative Ausführungsform gezeigt und die vorliegende Erfindung noch konkreter erklärt. Für die Ausführung der vorliegenden Erfindung wurde eine Längenmesseinrichtung 100 mit einem wie in Figur 1, 2 und 3 gezeigten Aufbau und für die Vergleichsausführung eine Längenmesseinrichtung 100 mit einem wie in Figur 8 und 9 gezeigten Aufbau vorbereitet. Die Länge der Skalenbasis 1 betrug 1064 mm, der Abstand der Anbringungsöffnungen 25 der Skalenbasis 1 betrug 250 mm, und der Abstand von beiden Enden bis zu den Anbringungsöffnungen 25 betrug 32 mm. Die Länge jedes Anbringungsabschnitts 21 wurde mit ± 15 mm von der Mitte der Anbringungsöffnung (an beiden Enden von der Mitte der Anbringungsöffnung 25 bis zum Ende) festgelegt. Der zurückgesetzte Flächenbereich 24 wurde durch eine Schneidebearbeitung so gebildet, dass er zwischen den Anbringungsabschnitten 21 jeweils eine Tiefe von 0,1 mm von der Anbringungsfläche 23 gesehen erreichte.

Unter Verwendung eines Silikonklebstoffs [Einkomponenten-Silikon-Dichtungsmaterial (Alkoholtyp)] und eines runden stabförmigen Nitrilkautschuks, der in eine passende Länge geschnitten worden war, wurde eine Glasskale 2 in dieser Skalenbasis 1 aufgenommen und fixiert.

Für die Vergleichsausführung wurde eine Ausführung hergestellt, bei der keine zurückgesetzten Flächenbereiche 24 ausgebildet waren.

Die Ausführung der Erfindung und die Vergleichsausführung wurden durch Hutschrauben M6 26, die in den einzelnen Anbringungsöffnungen 25 angeordnet waren, an der Bank einer Werkzeugmaschine festgezogen und fixiert. Dabei wurde ein Drehmomentschlüssel verwendet und eine Regulierung vorgenommen, damit das Festziehungsdrehmoment jeder Schraube mit ungefähr 10 N·m einheitlich wurde.

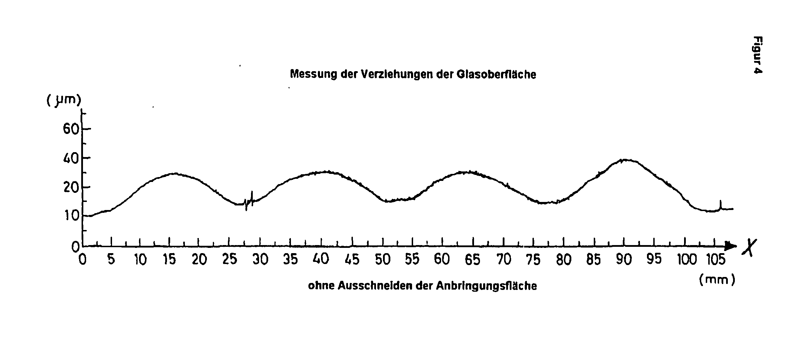

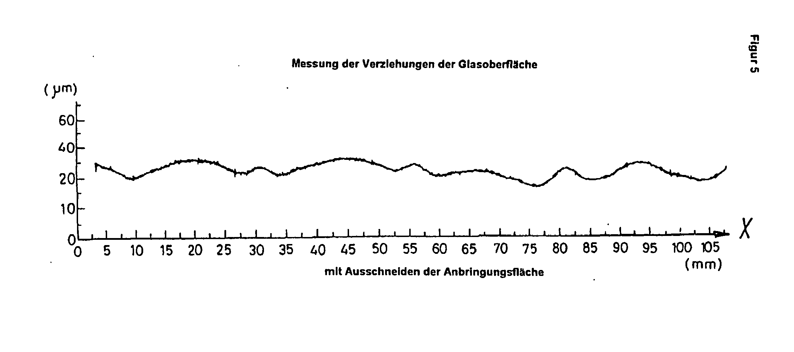

Die Verbiegungen der Glasskalenoberfläche der angebrachten Vergleichsausführung und der angebrachten Ausführung der Erfindung wurden unter Verwendung einer Laserentfernungsmessvorreichtung als Entfernung von der Anbringungsfläche 23 gemessen. Die Ergebnisse sind in Figur 4 und 5 gezeigt. Wie aus Figur 4 und 5 klar wird, ist die Breite der Wellungen in Bezug auf die Anbringungsöffnungen 25 bei der Vergleichsausführung von Figur 4, bei der keine zurückgesetzten Flächenbereiche 24 ausgebildet waren, verglichen mit der Ausführung der Erfindung von Figur 5 größer.

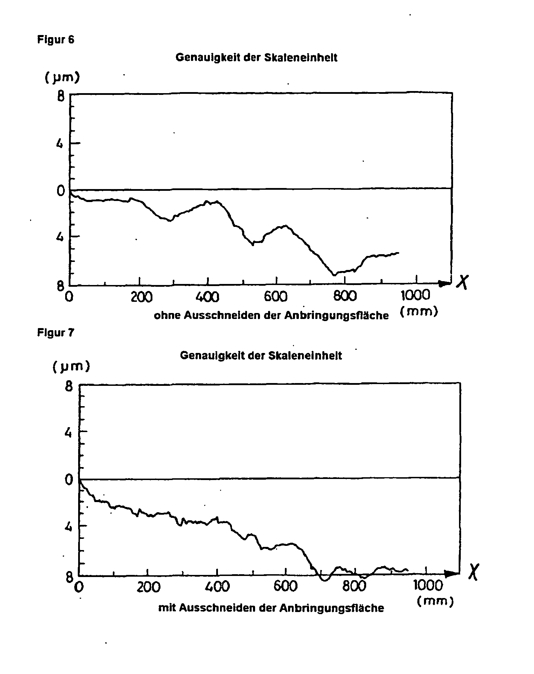

Die Genauigkeit der Vergleichsauführung und der Ausführung der Erfindung wurde mit einer Laservergleichswellenlängenmessvorrichtung (hergestellt von Agilent Technologies, Laserlichtquelle: 5517B, Luftsensor: 1075aC, Körperlaser: 10757D) gemessen. Die Ergebnisse sind in Figur 6 und 7 gezeigt.

Wie aus Figur 6 und 7 klar wird, verändert sich die Größe der Verbiegung in Bezug auf die Entfernung bei der Vergleichsausführung von Figur 6 unregelmäßig stufenförmig. Dies liegt wohl daran, dass ein Einfluss durch die Wellungen erhalten wird. Im Gegensatz dazu kommt es bei der Ausführung der Erfindung von Figur 7 zu einer etwa linearen Veränderung. Aus den obigen Ergebnissen wird die Wirkung der vorliegenden Erfindung klar.

Die vorliegende Erfindung kann nicht nur für Längenmesseinrichtungen, die das relative Bewegungsausmaß bei der Verarbeitung durch eine Werkzeugmaschine o.ä. messen, sondern auch für Längenmesseinrichtungen, die verschiedenste geradlinige Entfernungen, Bewegungsausmaße oder Positionsverschiebungsausmaße messen sollen, angewendet werden. Auch die Gleitereinheit ist nicht auf den Aufbau der obigen Ausführungsform beschränkt, sondern es können verschiedenste Aufbauten und Verfahren eingesetzt werden. Das Material der Skala ist vorzugsweise Glas, es sind aber auch andere bewährte Materialien wie Kunststoff oder Metall möglich.

## Patentansprüche

1. Längenmesseinrichtung, aufweisend
- eine Skale (2),
- eine Gleitereinheit (6), die diese Skale (2) abtastet und einen Positionsmesswert generiert,
- eine hohle Skalenbasis (1), die die Skale (2) und die Gleitereinheit (6) aufnimmt,
wobei die Skale (2) an einer Innenfläche der Skalenbasis (1) anliegend befestigt ist und seitlich neben der Skale (2) an der Skalenbasis (1) in Messrichtung (X) voneinander beabstandete Anbringungsöffnungen (25) zur Anbringung der Skalenbasis (1) vorhanden sind und Anbringungsflächen (23) vorhanden sind, die auf die Fläche treffen, an der die Anbringung erfolgt, **dadurch gekennzeichnet, dass** die Anbringungsflächen (23) in Anbringungsabschnitten (21) am Umfang der Anbringungsöffnungen (25) angeordnet sind und in Messrichtung (X) betrachtet, zwischen jeweils zwei Anbringungsabschnitten (21) ein gegenüber den Anbringungsflächen (23) zurückgesetzter Flächenbereich (24) vorhanden ist, der die Fläche, an der die Anbringung erfolgt, nicht berührt, wobei die Anbringungsflächen (23) und die zurückgesetzten Flächenbereiche (24) einstückig an der Skalenbasis (1) ausgebildet sind.

2. Längenmesseinrichtung nach Anspruch 1, **dadurch gekennzeichnet, dass** die Anbringungsflächen (23) bandförmig in Messrichtung (X) verlaufen und jeweils beidseitig einer Anbringungsöffnung (25) angeordnet sind, wobei die Fläche im Zwischenraum zwischen diesen bandförmig verlaufenden Anbringungsflächen (23) gegenüber den Anbringungsflächen (23) ebenfalls zurückgesetzt ist.

## Claims

1. Length measuring device having
- a scale (2),
- a slider unit (6) which scans said scale (2) and generates a measured position value,
- a hollow scale base (1) which accommodates the scale (2) and the slider unit (6),
the scale (2) being fastened adjacently on an inner surface of the scale base (1), and installation openings (25) for installing the scale base (1) being present laterally alongside the scale (2) on the scale base (1) spaced apart from one another in the measuring direction (X), and there being present installing surfaces (23) which come into contact with the surface where the installation is done, **characterized in that** the installing surfaces (23) are arranged in installing portions (21) on the periphery of the installing openings (25) and, viewed in the measuring direction (X), there is present between the in each case two installing portions (21) a surface region (24) which is recessed with respect to the installing surfaces (23) and does not touch the surface where the installation is done, the installing surfaces (23) and the recessed surface regions (24) being integrally formed on the scale base (1).

2. Length measuring device according to Claim 1, **characterized in that** the installing surfaces (23) run in the form of a strip in the measuring direction (X) and are arranged in each case on both sides of an installing opening (25), the surface in the interspace between said installing surfaces (23) running like a strip being likewise recessed with respect to the installing surfaces (23).

## Revendications

1. Dispositif de mesure de longueur, présentant :
- une échelle (2),
- une unité de coulisseau (6), qui balaye cette échelle (2) et génère une valeur de mesure de position,
- une base d'échelle creuse (1), qui reçoit l'échelle (2) et l'unité de coulisseau (6),
l'échelle (2) étant fixée en appui contre une surface intérieure de la base d'échelle (1) et des ouvertures de montage (25) pour monter la base d'échelle (1), espacées les unes des autres dans la direction de mesure (X), étant prévues latéralement à côté de l'échelle (2) au niveau de la base d'échelle (1) et des surfaces de montage (23) étant prévues, lesquelles viennent en contact avec la surface au niveau de laquelle s'effectue le montage, **caractérisé en ce que**
les surfaces de montage (23) sont disposées dans des portions de montage (21) au niveau de la périphérie des ouvertures de montage (25) et, vu dans la direction de mesure (X), une région de surface (24) en retrait par rapport aux surfaces de montage (23) est à chaque fois prévue entre deux portions de montage (21), laquelle région de surface ne vient pas en contact avec la surface au niveau de laquelle s'effectue le montage, les surfaces de montage (23) et les régions de surface en retrait (24) étant réalisées d'une seule pièce au niveau de la base d'échelle (1).

2. Dispositif de mesure de longueur selon la revendication 1, **caractérisé en ce que** les surfaces de montage (23) s'étendent en forme de bande dans la direction de mesure (X) et sont à chaque fois disposées de chaque côté d'une ouverture de montage (25), la surface dans l'espace intermédiaire entre ces surfaces de montage (23) s'étendant en forme de bande étant également en retrait par rapport aux surfaces de montage (23).
